**Europäisches Patentamt**

**European Patent Office**

**Office européen des brevets**

(11) Publication number : **0 487 467 A2**

# (12) EUROPEAN PATENT APPLICATION

(21) Application number : **91830501.2**

(22) Date of filing : **13.11.91**

(51) Int. Cl.⁵ : **G05D 16/06**

(30) Priority : **20.11.90 IT 374090**

(43) Date of publication of application :
**27.05.92 Bulletin 92/22**

(84) Designated Contracting States :
**BE DE FR GB NL**

(71) Applicant : **O.M.T. OFFICINA MECCANICA TARTARINI S.p.A.**
**Via Paolo Fabbri, 1**
**I-40013 Castelmaggiore (Bologna) (IT)**

(72) Inventor : **Tartarini, Roberto**
**Via di Corticella, 1**
**I-40013 Castel Maggiore (Bologna) (IT)**

(74) Representative : **Lanzoni, Luciano**
**c/o BUGNION S.p.A. Via dei Mille, 19**
**I-40121 Bologna (IT)**

(54) **An axial diaphragm gas pressure regulator.**

(57)    The pressure regulator comprises a flat, flexible diaphragm (6) mounted between two half casings (1, 2) and disposed normal to the axes of the inlet (3) and the outlet (4), which is offered flush on one side to a substantially flat ring (20) associated with the first half casing (1) at the innermost end of the relative port (1a), affording a plurality of uniformly distributed slots (10) exposed or stopped by the diaphragm (6) and combining with the first half casing (1) to create a first chamber (21) beyond the port (1a) ; the diaphragm (6) is held in place from the opposite side by a plate (9) seated in the second half casing (2) at the innermost end of the relative port (2a) and combining with the half casing (2) to create a second chamber (22) facing the first chamber (21). The first port (1a), the slots (10), the two chambers (21, 22) and the second port (2a) combine to provide a passage through which the gas is able to bypass the diaphragm (6) when separated from the ring (20).

FIG1

EP 0 487 467 A2

The present invention relates to an axial diaphragm gas pressure regulator.

The prior art embraces gas pressure regulators, or pressure reducing controls, essentially comprising an inlet admitting gas at a given pressure, and an outlet disposed coaxially with the inlet from which gas is delivered at a consumer supply pressure, or at all events a presure different to the inlet pressure.

In a first embodiment of conventional, and indeed classic design, the pressure control and sealing functions of the regulator are "split" between two distinct parts consisting in respective diaphragms, the one operating as a barrier proper, separating the inlet and outlet pressures, the other providing the seal for a valve element shifted and guided by the first diaphragm. Thus, the component entrusted with the function of shutting off the flow of gas consists effectively in a sealing ring on which the laminar force of the flow is concentrated, a factor which, compounded further by the presence of moving mechanical parts, results in high noise levels with the device operating under normal conditions.

At all events, the construction of these units is such that even with complete breakdown and loss of the gas seal, the pressure reducing device will be made to assume its closed configuration regardless ('fail-to-close' design).

Pressure regulators of the type outlined above have been produced in the past by the same applicant, as witness Utility Model IT 174925 which discloses a device comprising four elements formed by machining and fixed axially one to another in such a way as to establish a pressure reducing and monitoring assembly operating in tandem precisely according to the principles described above.

In a second type of regulator conventionally known as an axial flow regulator, the inlet and outlet are separated by a pressure reducing valve proper, consisting in a single diaphragm or flexible seal of annular embodiment accommodated internally of an intermediate housing rigidly interconnecting the inlet and outlet; the valve comprises a central barrier or flow diverter affording a plurality of slots affording passage to the gas, formed in parts of the barrier lying on either side of centre and occupying areas of oppositely disposed cone faces, which are engaged to a greater or lesser degree by the diaphragm when closing. More exactly, control over the pressure of the gas is obtained through deformation of the diaghragm, which settles against the central barrier when in the at-rest position, masking the passages between the inlet and the outlet, and expands in response to any imbalance between the inlet and outlet pressures, thereby admitting and increased or reduced flow of gas. Thus, the one element performs the function of a regulator in addition to that of a seal.

Regulators of this second type require a higher level of technology in manufacture (castings) than the first, and are 'fail-to-open' in operation, i.e. designed to assume the open configuration in the event of the diaphragm breaking down.

Accordingly the object of the present invention is to overcome the drawbacks mentioned above through the embodiment of an axial diaphragm gas pressure regulator incorporating a single diaphragm, which features simplicity in construction, economy both in construction and in maintenance, dependability and precision in operation, an low noise levels.

The stated object is realized in a gas pressure regulator as characterized in the appended claims, which comprises first and second half casings affording respective first and second ports, and interposed between the two half casings, a flat, elastically deformable sealing element or diaphragm disposed perpendicularly to the axes of the inlet and an outlet, which is offered flush on the one side to a flat ring associated with the first half casing at the innermost end of the relative port, affording a set of uniformly distributed holes exposed or stopped by the diaphragm and combining with the first half casing to create a first chamber that allows gas to flow out of the port and past the diaphragm, and retained on the opposite side by means associated with the second half casing at the innermost end of the relative port and combining with the second half casing to create a second chamber facing the first chamber; the first port, the holes, the first and the second chamber and the second port combine to provide a passage through which gas is allowed to flow when deformation of the diaphragm occurs.

The invention will now be described in detail, by way of example, with the aid of the accompanying drawings, in which:

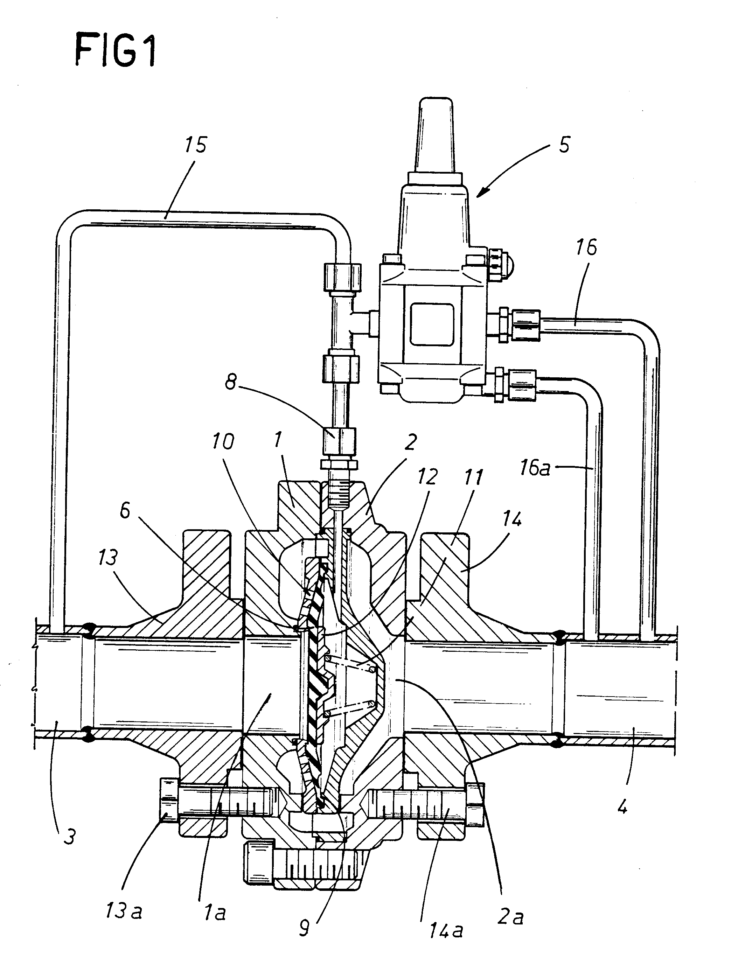

– fig 1 is the side view of a pressure regulator according to the invention, seen with certain parts omitted better to reveal others;

– fig 2 is an enlarged side view showing a detail of the diaphragm of a regulator as in fig 1.

With reference to the drawings, the gas pressure regulator disclosed comprises a first and a second half casing 1 and 2 each with a central port 1a and 2a, which are united one to another in a matching flanged and fluid-tight fit and secured by means of flanged connectors 13 and 14 and screws 13a and 14a respectively to a first inlet pipe 3 in receipt of gas at a certain pressure from a given source, and to a second outlet pipe 4 through which the same gas emerges at a regulated pressure for use by a service or appliance.

The inlet 3 and the outlet 4, hence the first and second half casings 1 and 2, are connected with a pilot system 5 through respective pipes 15, 16 and 16a, and controlled thus to allow or disallow the flow of gas from the inlet 3 to the outlet 4 at the prescribed pressure by opening against or closing under a sealing backpressure (to be described in due course).

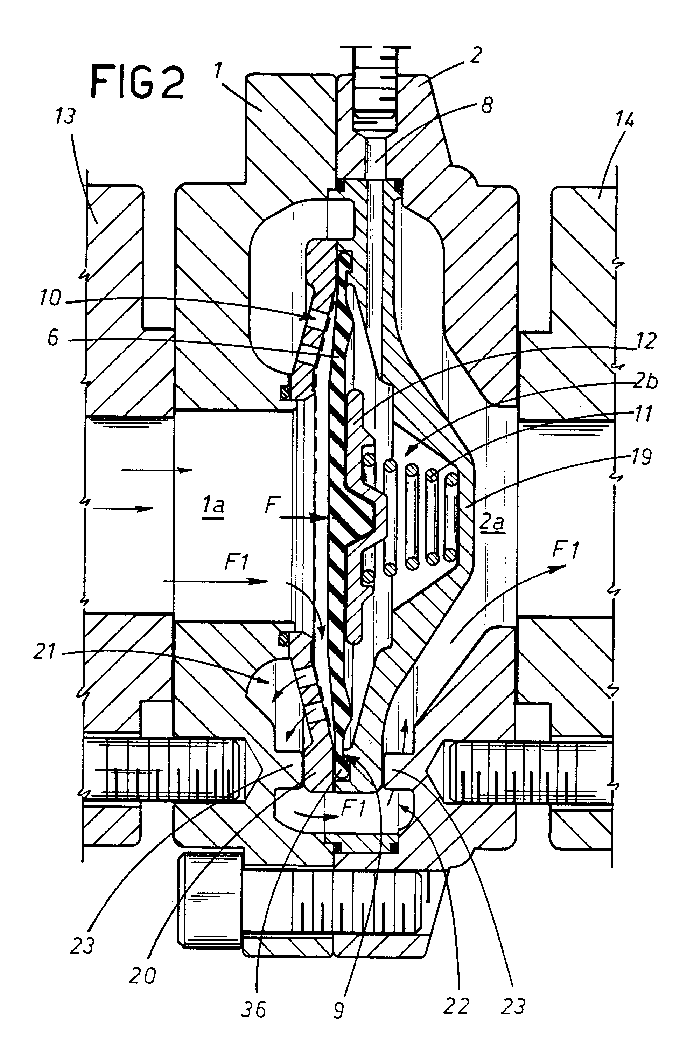

6 denotes an elastically deformable sealing element interposed between the two half casings 1 and 2 and disposed perpendicular to the axes of the pipes 3 and 4. In the example illustrated, more exactly, the element 6 (which functions both as a pressure regulator and as a valve element proper, as will be seen in due course) consists in a flexible circular diaphragm of which one face is offered in frontal contact to a substantially flat ring 20 associated with the face of the first half casing 1 at the innermost end of the relative port 1a and affording a plurality of holes 10; fashioned as slots in the particular embodiment illustrated, the holes are uniformly distribyted over the face of the ring 20 and can be obscured by the corresponding face of the seal 6. As discernible from fig 2, this same ring 20 also combines with the first half casing 1 to create a first chamber 21 through which gas can pass out of the port 1a and beyond the diaphragm 6. The opposite face of the diaphragm 6 is retained by means 9 (see also fig 2) associated with the second half casing 2 at the innermost end of the relative port 2a; such means consist in a plate 19 seated to a fluid-tight fit in the second half casing 2 and affording a circular groove positioned to receive a raised circumferential lip or bead 36 afforded by the diaphragm 6. The plate 19 combines with the second half casing 2 to create a second chamber 22 positioned opposite and of similar embodiment to the first chamber 21, and encompasses a further chamber 2a internally of the second half casing 2, connected by way of a third pipe 8 to the pilot system 5. This further chamber 2a accomodates a tapered coil spring 11 seated between on the one hand, a second, or backup plate 12 breasted in contact with the central portion of the diaphragm seal 6, and on the other, the farthest internal extremity of the first plate 19.

Not being integrally embodied with the respective half casings 1 and 2, the ring 20 and the plate 19 are held in position mechanically by relative circumferential seatings, and by a set of lugs or projections 23 extending from the half casings 1 and 2 which also afford the necessary passage through the first and second chambers 21 and 22.

With a diaphragm 6 thus embodied and positioned, regulation of the flow of gas from the inlet 3 to the outlet 4 is achieved by means of the pilot system 5, which determines the deformation of the diaphragm by varying backpressure internally of the chamber denoted 2b through the third pipe 8. Thus, the flow of gas coming into the inlet 3 at a given pressure is blocked by the diaphragm 6 as long as there is identical backpressure resulting from the flow directed into the chamber 2b from the pilot system 5, which allows the diaphragm 6 to be held in a stable closed position by the force of the spring 11; the moment that a drop registers in pressure through the outlet 4, the diaphragm 6 will deform elastically in the flow direction (arrow F, fig 2) due to the greater pressure registering through the inlet 3. The deformed position of the diaphragm 6 is that illustrated by the bold line of fig 2, whilst the at-rest position is shown by the phantom line.

The effect of the deformation is in effect to lay open the slots 10 and allow passage of a greater volume of gas to the outlet 4 (arrow F1, fig 2) by way of the first port 1a, the slots 10, the first chamber 21, the second chamber 22 and the second port 2a, bypassing the diaphragm 6 completely.

Thus, by adopting the diaphragm and half casing arrangement described and illustrated, the design of a gas pressure regulator can be rendered highly practical and simple, since the diaphragm is able to perform the function both of a simple regulator and of a genuine sealing or valve element by virtue of its very construction. The regulator, considered in its entirety, is therefore much simpler than a conventional axial flow type, from the standpoint both of construction and of maintenance, as well as being more compact embodiment by reason of its ultra flat shape.

Finally, the regulator generates almost no noise in operation under normal conditions inasmuch as there are no moving mechanical parts, and such parts as are utilized in the preferred embodiment shown are essentially noiseless.

## Claims

1) An axial diaphragm gas pressure regulator of the type comprising at least a first half casing and a second half casing (1, 2) each affording a central port (1a, 2a), disposed face to face, united one to another in a flaged fluid-tight fit and connected respectively to a first inlet pipe (3) in receipt of gas at a given pressure and a second outlet pipe (4) through which the gas emerges at a selected supply pressure, and a pilot system (5) by which the half casings (1, 2) and the inlet and outlet (3, 4) are controlled such that the passage through which gas flows from the inlet (3) to the outlet (4) at the supply pressure is opened or closed against a selected backpressure,
characterized

– in that it further comprises a flat, elastically deformable sealing element (6) interposed between the two half casings (1, 2), disposed normal to the axes of the inlet (3) and the outlet (4), which is offered flush on the one side to a substantially flat ring (20) associated with the first half casing (1) at the innermost end of the relative port (1a), affording a plurality of uniformly distributed holes (10) exposed or stopped by the sealing element (6) and combining with the first half casing (1) to create a first chamber (21) that allows gas to flow out of the port (1a) and past the sealing element (6), and retained on the opposite side by means (9) associated with the second half casing (2) at the innermost end of the relative port (2a) and combining with the second half casing to create a second chamber (22) facing the first chamber (21); and

– in that the first port (1a), the holes (10), the first and the second chamber (21, 22) and the second port (2a) combine to provide a passage through which the gas is directed when deformation of the sealing element (6) occurs.

2) A regulator as in claim 1, wherein the sealing element (6) consists in a flexible circular diaphragm of which the outer circumference exhibits a raised bead (36) insertable in a circular groove afforded by a plate (19) accommodated internally of the second half casing (2) and constituting the retaining means (9).

3) A regulator as in claim 1, wherein the ring (20) is accommodated stably and to a fluid-tight fit in the first half casing (1), and the holes (10) consist in a plurality of circumferential slots through which gas is allowed to pass when deformation of the sealing element (6) occurs.

4) A regulator as in claim 1, wherein the second half casing (2) accommodates a tapered coil spring (11) seated between a backup plate (12) breasted in frontal contact with the sealing element (6), and the internal part of the retaining means (9).

5) A regulator as in claim 1, wherein the pilot system (5) is connected by way of a third pipe (8) to a chamber (2b) encompassed between the sealing element (6) and the plate (19) of the retaining means (9), in such a way as to establish a pilot backpressure directed against the sealing element.

6) A regulator as in claim 1, wherein the ring (20) and the retaining means (9) are coupled stably one to another and secured internally of the half casings (1, 2) by relative circumferential seatings and by a plurality of uniformly distributed projections (23) issuing from the circumference of the respective half casings (1, 2) and allowing flow through the chambers (21, 22).

# FIG 1

FIG 2